# FASCICULE DE BREVET EUROPEEN

(11) **EP 2 457 278 B1**
(45) Date de publication et mention de la délivrance du brevet: **23.10.2013**
(21) Numéro de dépôt: 10737951.3
(22) Date de dépôt: 07.07.2010
(51) Int. Cl.: H01M 4/58, H01M 4/62, H01M 10/052, H01M 4/136, C01B 17/02, H01M 4/1397

(54) **MATÉRIAU COMPOSITE CONDUCTEUR SOUFRE/CARBONE, UTILISATION COMME ÉLECTRODE ET PROCÉDÉ DE FABRICATION D'UN TEL MATÉRIAU**
LITENDES SCHWEFEL/KOHLENSTOFF-VERBUNDMATERIAL, DESSEN VERWENDUNG ALS ELEKTRODE SOWIE VERFAHREN ZUR HERSTELLUNG EINES DERARTIGEN MATERIALS
CONDUCTIVE SULFUR/CARBON COMPOSITE MATERIAL, USE THEREOF AS AN ELECTRODE AND METHOD FOR MANUFACTURING SUCH A MATERIAL

(30) Priorité: 20.07.2009 FR 0903558
(43) Date de publication de la demande: 30.05.2012
(73) Titulaire: Commissariat à l'Énergie Atomique et aux Énergies Alternatives, 75015 Paris (FR)
(72) Inventeur: BARCHASZ, Céline, 38000 Grenoble (FR); ASSOUAN, Yves-Grégoire, 31200 Toulouse (FR); BOURBON, Carole, F-38590 Saint-Michel de Saint-Geoirs (FR); PATOUX, Sébastien, 38500 Saint Nicolas de Macherin (FR)
(74) Mandataire: Talbot, Alexandre
(86) Numéro de dépôt international: PCT/FR2010/000500
(87) Numéro de publication internationale: WO 2011/010010

(56) Documents cités:
- US-A- 4 127 634
- KOBAYASHI T ET AL: "All solid-state battery with sulfur electrode and thio-LISICON electrolyte" JOURNAL OF POWER SOURCES, ELSEVIER SA, CH, vol. 182, no. 2, 1 août 2008 (2008-08-01), pages 621-625, XP022732228 ISSN: 0378-7753 [extrait le 2008-03-22]
- JI X ET AL: "A highly ordered nanostructured carbon-sulphur cathode for lithium-sulphur batteries" NATURE MATERIALS JUNE 2009 NATURE PUBLISHING GROUP GBR, vol. 8, no. 6, juin 2009 (2009-06), pages 500-506, XP002569830
- ZHENG W ET AL: "Novel nanosized adsorbing sulfur composite cathode materials for the advanced secondary lithium batteries" ELECTROCHIMICA ACTA, ELSEVIER SCIENCE PUBLISHERS, BARKING, GB, vol. 51, no. 7, 5 janvier 2006 (2006-01-05), pages 1330-1335, XP025168466 ISSN: 0013-4686 [extrait le 2006-01-05]
- WANG J ET AL: "Polymer lithium cells with sulfur composites as cathode materials" ELECTROCHIMICA ACTA, ELSEVIER SCIENCE PUBLISHERS, BARKING, GB, vol. 48, no. 13, 15 juin 2003 (2003-06-15) , pages 1861-1867, XP004429413 ISSN: 0013-4686

## Description

### Domaine technique de l'invention

L'invention concerne un procédé de fabrication d'un matériau composite conducteur soufre/carbone pulvérulent obtenu uniquement à partir d'un soufre de départ et d'un carbone de départ.

L'invention concerne également un matériau composite conducteur soufre/carbone pulvérulent directement obtenu par un tel procédé de fabrication et son utilisation comme matériau actif d'une électrode, en particulier, d'un accumulateur au lithium.

### État de la technique

Le soufre peut être utilisé comme matériau actif dans les électrodes notamment pour les accumulateurs lithium-soufre (Li/S). Les accumulateurs Li/S constituent une alternative possible aux accumulateurs conventionnels lithium-ion (Li-ion) utilisés pour le stockage d'énergie notamment pour les véhicules électriques ou les cellules photovoltaïques.

En effet, il est connu que le soufre utilisé comme électrode positive dans un accumulateur de type Li/S a une capacité spécifique théorique de 1675 mAh/g de soufre.

Dans les accumulateurs Li/S, la réaction électrochimique globale entre le lithium et le soufre crée une différence de potentiel de 2V et peut être représentée par l'équilibre suivant :

2Li + S ⇄ Li₂S

Du fait de sa grande densité d'énergie massique théorique (2600 Wh/kg_{Li2S}), de son abondance naturelle et de sa faible toxicité, le soufre est un matériau prometteur pour une utilisation comme matériau actif d'accumulateur de type Li-ion. Ces accumulateurs à base de soufre sont des candidats prometteurs aptes à répondre aux exigences en énergie massique dans le domaine de l'alimentation autonome.

Néanmoins, à l'heure actuelle, les électrodes positives à base de soufre donnent des résultats nettement inférieurs aux capacités théorique. Les causes de ces faibles performances sont, notamment, dues à la faible conductivité électronique du soufre avec une conductivité σ de 5.10⁻³⁰ S/m. De manière connue, un matériau conducteur tel que le carbone peut être incorporé au soufre pour résoudre ce problème. Un mélange soufre/carbone est, généralement, obtenu selon une technique conventionnelle de mélange et/ou de broyage mécanique. Dans l'article "All solid-state battery with sulfur electrode and thio-LiSiCON electrolyte", (Journal of Power Sources, 2008, vol. 182, n°2, P.621-625), Kobayashi, T. et al. décrivent, par exemple, un composite soufre/carbone obtenu par mélange mécanique avec un rapport massique carbone/soufre de 50:50. La taille de particules du soufre initial, comprise entre 1 et 10µm, reste alors inchangée dans le composite soufre/carbone.

Une poudre soufre/carbone ainsi produite peut être soit directement mise en forme mécaniquement soit mélangée à un liant pour former une électrode. Le liant assure alors la cohésion mécanique des particules de soufre et de carbone. Les capacités intrinsèques et les performances électrochimiques de l'électrode dépendent, de façon critique, de l'aptitude des électrons, générés par les réactions électrochimiques, à circuler au sein de l'électrode. Les interactions et la proximité entre les particules de soufre et de carbone jouent, par conséquent, un rôle primordial sur la conduction électronique. La qualité du mélange soufre/carbone améliore notablement les capacités de l'électrode réalisée à partir de ce mélange.

De récents travaux ont été réalisés afin d'améliorer la qualité des performances des électrodes à base de soufre. Notamment, les articles de Ji, X.et al. (Nature Materials, 2009, vol. 8, n°6, P.500-506), de Zheng, W. et al. (Electrochimica Acta, 2006, vol. 51, P. 1330-1335) et de Wang, J. et al. (Electrochimica Acta, 2003, vol. 48, P. 1861-1867) décrivent des procédés de fabrication d'une électrode comportant un matériau conducteur poreux à base de carbone et dont les pores sont remplis de soufre.

De même, le document US-B-7361431 décrit un procédé de fabrication d'une électrode comportant un matériau conducteur poreux dont les pores sont remplis de soufre et/ou d'un composé organique sulfuré. Le matériau conducteur poreux à base de soufre est obtenu à partir de soufre et de carbone poreux traités thermiquement. Le traitement thermique est réalisé dans un container scellé, maintenu à une température comprise entre 30°C et 300°C et sous une pression contrôlée comprise entre 10⁻⁶ Torr (1.333·10⁻¹⁰ MPa) et 760 Torr (0.101 MPa). Le chauffage fait fondre et/ou vaporiser le soufre qui remplit alors les pores du carbone. Les gaz présents dans les pores et le container peuvent ensuite être éliminés par diminution de la pression à l'intérieur du container scellé jusqu'à une pression allant de 10⁻⁶ Torr (1.333·10⁻¹⁰ MPa) et 760 Torr (0.101 MPa). Le soufre se solidifie à l'intérieur des pores pour former un matériau conducteur amorphe.

Néanmoins, le procédé de fabrication d'un tel matériau conducteur poreux, rempli de soufre, reste difficile à mettre en oeuvre et entraîne une perte importante de matière, notamment de soufre. En effet, une partie du soufre vaporisé lors des étapes de traitement thermique est éliminée lors de la mise sous vide ce qui entraîne, de fait, une consommation importante en soufre.

### Objet de l'invention

L'invention a pour but de remédier aux inconvénients de l'art antérieur et, notamment, de proposer un matériau à base de soufre ayant une bonne conductivité électronique et pouvant être utilisé comme matériau actif d'une électrode, en particulier, d'accumulateurs au lithium présentant des propriétés électrochimiques performantes.

L'invention a également pour but un procédé de fabrication simple, facile à mettre en oeuvre et peu coûteux permettant d'obtenir un tel matériau avec un rendement élevé.

Selon l'invention, ce but est atteint par un procédé de fabrication d'un matériau composite conducteur soufre/carbone, un matériau composite conducteur soufre/carbone pulvérulent directement obtenu par un tel procédé et l'utilisation d'un tel matériau, selon les revendications indexées.

### Description sommaire des dessins

D'autres avantages et caractéristiques ressortiront plus clairement de la description qui va suivre des modes particuliers de réalisation de l'invention donnés à titre d'exemples non limitatifs et représentés aux dessins annexés, dans lesquels :
- La figure 1 représente sur un même graphique deux diagrammes de diffraction aux rayons X (λ_{CuKα}) représentant l'intensité, en unité arbitraire, en fonction de l'angle 2θ, respectivement d'un soufre S₈ de structure α-orthorhombique, sous forme de poudre, commercialisé par la société Aldrich, et d'un matériau composite conducteur soufre/carbone selon l'invention, obtenu à l'exemple 1 (1-C80/20).
- La figure 2 représente, un cliché de microscopie électronique à balayage (MEB), avec un grossissement x 2000, du soufre α-S₈ de la figure 1.
- La figue 3 représente, un cliché de microscopie électronique à balayage (MEB), avec un grossissement x 5000, d'un matériau composite conducteur soufre/carbone selon l'invention, obtenu à l'exemple 2 (2-C80/20).
- La figure 4 représente, un cliché de microscopie électronique à balayage (MEB), avec un grossissement x 2000, d'un matériau composite conducteur soufre/carbone selon l'invention, obtenu à l'exemple 3 (3-C60/40).
- La figure 5 représente, un cliché de microscopie électronique à balayage (MEB), avec un grossissement x 1000, d'un matériau composite conducteur soufre/carbone selon l'invention, obtenu à l'exemple 4 (4-C70/30).
- La figure 6 représente, un cliché de microscopie électronique à balayage (MEB), avec un grossissement x 1000, d'un matériau composite conducteur soufre/carbone selon l'invention, obtenu à l'exemple 5 ( 5-C80/20).
- La figure 7 représente, la répartition granulométrique d'un matériau composite conducteur soufre/carbone 1-C80/20 selon l'invention, obtenu à l'exemple 1.
- La figure 8 représente la répartition granulométrique d'un matériau composite conducteur soufre/carbone 2-C80/20 selon la figure 3, après une étape de broyage.
- La figure 9 représente la répartition granulométrique d'un exemple comparatif de poudre de soufre α-S₈ de structure orthorhombique selon la figure 2, après une étape de broyage identique à celle du matériau composite de la figure 8.
- La figure 10 représente, sur un même graphique deux courbes représentant le premier cycle de charge/décharge, en mode intentiostatique à régime de C/10 entre un potentiel de 1,5V et 3V vs. Li⁺/Li, respectivement, d'un accumulateur de type "pile bouton" (3-C60/40-Li/S) comportant une électrode positive à base du matériau composite conducteur soufre/carbone selon la figure 4 (3-C60/40) et d'un premier exemple comparatif d'accumulateur Li/S conventionnel (0-Li/S).
- La figure 11 représente, sur un même graphique deux courbes d'évolution de la capacité spécifique en fonction du nombre de cycles, respectivement, de l'accumulateur 3-C60/40-Li/S selon l'invention et du premier exemple comparatif d'accumulateur 0-Li/S.
- La figure 12 représente, sur un même graphique deux courbes représentant la première décharge, en mode galvanostatique, à régime de C/10, à 20°C, entre un potentiel de 1,5V et 3V vs. Li⁺/Li, respectivement, d'un accumulateur de type "pile bouton" (7-C60/40-Li/S) comportant une électrode positive à base du matériau composite conducteur soufre/carbone, 7-C60/40, et d'un second exemple comparatif d'accumulateur (10-C60/40-Li/S) comportant une électrode positive à base du matériau composite conducteur soufre/carbone, 10-C60/40, obtenu par une méthode de broyage conventionnelle.

### Description des modes de réalisation particuliers de l'invention

Selon un premier mode de réalisation particulier, un procédé de fabrication permet d'obtenir un matériau composite conducteur soufre/carbone pulvérulent uniquement à partir de soufre et de carbone. Les propriétés conductrice et électrochimique du matériau composite conducteur soufre/carbone obtenu sont optimisées.

Pour des raisons de clarté, on utilisera dans la suite de la description le terme "carbone de départ" pour désigner un composé de départ formé d'un type de carbone ou de plusieurs types de carbone. On entend par type de carbone une structure ou une forme allotropique particulière du carbone.

Le carbone de départ peut, par exemple, être constitué d'une ou de plusieurs formes choisies parmi une forme sphéroïdale, ovoïde, fibreuse ou tubulaire. Le carbone de départ se présente, également, sous forme d'une structure monocouche ou multicouches.

De même, le carbone de départ peut être constitué d'une ou de plusieurs formes allotropiques de carbone.

Ainsi, le carbone de départ peut être un mélange pulvérulent de carbones ayant des propriétés, notamment électronique et mécanique, différentes selon la structure et/ou la forme allotropique de chaque carbone constituant le mélange.

Le carbone de départ est, avantageusement, constitué d'un ou de plusieurs carbones choisis parmi du graphite, du noir de carbone, des fibres de carbone, des nanotubes et les fullerènes de carbone.

La surface spécifique du carbone de départ est inférieure ou égale à 200 m²/g, de préférence, inférieure ou égale à 65 m²/g.

De même, pour des raisons de clarté, on utilisera dans la suite de la description le terme "soufre de départ" pour désigner un composé de départ formé d'un ou de plusieurs types de soufre. On entend par type de soufre une structure ou une forme allotropique particulière du soufre.

Le soufre de départ est constitué d'une ou de plusieurs formes allotropiques de soufre, choisies parmi la forme α-orthorhombique et β-monoclinique. Le soufre de départ est, de préférence, un soufre S₈ α-orthorhombique.

Le soufre et le carbone de départ sont, avantageusement, deux poudres distinctes. Le soufre et de carbone de départ peuvent être mélangés au préalable ou introduits séparément dans un réacteur. On utilise, par exemple, un réacteur autoclave ou une bombe de digestion, apte à être scellé hermétiquement et à résister à des pressions élevées, généralement de l'ordre de 150 bars (15 MPa).

Le procédé de fabrication du matériau composite conducteur soufre/carbone pulvérulent comporte l'introduction dans le réacteur, à pression atmosphérique, uniquement du soufre et du carbone de départ. Les proportions sont comprises entre 50% et 90% en poids de soufre de départ et entre 50% et 10% en poids de carbone de départ, de sorte que la somme des proportions, respectivement, du soufre et du carbone de départ atteigne 100%.

Le réacteur est fermé et scellé hermétiquement sous pression atmosphérique. Ainsi, initialement c'est-à-dire avant tout traitement thermique, l'intérieur du réacteur fermé et scellé est à pression atmosphérique. Puis, le réacteur est porté à une température de chauffage (T_{c}) comprise entre 115°C et 400°C, de préférence, entre 125°C et 200°C. Le réacteur scellé hermétiquement peut, par exemple, être chauffé dans une étuve.

Le chauffage à T_{c} du réacteur scellé hermétiquement provoque la fusion uniquement du soufre à l'intérieur du réacteur. À cette température T_{c}, le soufre se présente majoritairement sous forme liquide, en équilibre avec une partie du soufre sous forme vapeur. Le traitement thermique est réalisé sans mise sous vide du réacteur pour éviter la vaporisation totale du soufre.

Le réacteur scellé hermétiquement est ensuite maintenu à la température de chauffage (T_{c}) durant un temps prédéterminé. On entend par "un temps prédéterminé", un temps suffisant pour faire fondre le soufre de départ et atteindre l'équilibre. La durée de chauffage est déterminée en fonction de la quantité de soufre et de carbone de départ, introduite dans le réacteur.

La durée du chauffage, à la température de chauffage (T_{c}), du réacteur scellé hermétiquement peut être comprise entre 2h et 168h, de préférence entre 6h et 36h.

Cette étape de traitement thermique est réalisée, avantageusement, en présence d'air. Ainsi, la fusion du soufre de départ s'accompagne de la formation partielle de soufre gazeux, essentiellement sous forme de dioxyde de soufre (SO₂) selon la réaction (1) suivante:

S₈ + 8O₂ ⇄ 8SO₂ (1)

Il peut également se former d'autres dérivés du soufre tels que du trioxyde de soufre (SO₃), résultat de l'oxydation du dioxyde de soufre (SO₂) selon la réaction (2) suivante :

2SO₂ + O₂ ⇄ 2SO₃ (2)

En chauffant, la pression à l'intérieur du réacteur initialement à pression atmosphérique augmente jusqu'à atteindre une pression à l'équilibre (P_{eq}) selon un phénomène thermodynamique connu résultant de l'augmentation de la température à l'intérieur du réacteur scellé hermétiquement ainsi que la formation du gaz soufré.

Aucune régulation externe de la pression n'est réalisée à l'intérieur du réacteur scellé hermétiquement. Par régulation externe de la pression; on entend une régulation de la pression à l'intérieur du réacteur permettant soit de maintenir une pression atmosphérique à l'intérieur du réacteur soit de réduire la pression, par exemple, jusqu'à la mise sous vide du réacteur ou, inversement, d'augmenter la pression à des pressions supérieures à P_{eq}.

L'augmentation de la pression à l'intérieur du réacteur, de la pression atmosphérique à la pression P_{eq}, favorise le brassage de la matière et, notamment, des particules de carbone dans le soufre fondu. Le chauffage sous réacteur fermé assure, notamment, l'homogénéisation du milieu et l'obtention d'un mélange soufre/carbone homogène.

Après le traitement thermique, la température du réacteur revient, de préférence, naturellement et progressivement, à température ambiante. On entend par "naturellement" le fait qu'aucun refroidissement actif est réalisé. Après arrêt du chauffage, la température du réacteur revient à température ambiante uniquement par échanges thermiques entre l'air ambiant et le réacteur. En chauffant dans une étuve, la durée de refroidissement dépendra donc de l'inertie thermique de l'étuve.

Selon une variante, la température du réacteur est ramenée à température ambiante après le traitement thermique, par refroidissement actif, par exemple, en immergeant une partie du réacteur dans un bain d'eau ou dans un bain d'azote liquide.

Après ouverture du réacteur, on récupère une poudre fine noire constituant le matériau composite conducteur soufre/carbone.

La proportion de soufre dans le matériau composite conducteur soufre/carbone représente, avantageusement, entre 50% et 90% en poids du poids total du matériau composite conducteur soufre/carbone.

Le matériau composite conducteur soufre/carbone directement obtenu selon le procédé décrit ci-dessus est, de préférence, constitué par du soufre et du carbone dans des proportions comprise entre 50% et 90% en poids pour le soufre et entre 50% et 10% en poids pour le carbone. Le procédé de fabrication permet donc d'obtenir un matériau composite conducteur soufre/carbone quasiment sans perte de matières premières au cours des différentes étapes du procédé de fabrication. Les pertes en soufre et/ou en carbone de départ sont, avantageusement, inférieure à 5%, de préférence, inférieure à 1% en poids par rapport au poids total de soufre de départ et de carbone de départ.

Selon un mode de réalisation particulier, le procédé de fabrication comporte une étape supplémentaire de broyage du matériau composite conducteur soufre/carbone pour obtenir une distribution granulométrique homogène. Après retour à température ambiante et pression atmosphérique, le réacteur est ouvert et le matériau composite conducteur soufre/carbone récupéré. Ce dernier est ensuite broyé mécaniquement par voie sèche ou humide selon tout procédé connu. À titre d'exemple, le broyage mécanique de la poudre de matériau composite conducteur soufre/carbone est réalisé durant une période comprise entre 15min et 24h.

### Préparation d'un matériau composite conducteur soufre/carbone :

### Caractéristiques des produits de départ

### Carbone

- Carbone de type Super P™, commercialisé par la société Timcal : surface spécifique 62m²/g.
- Fibres de carbone de type VGCF® (en anglais "vapor grown carbon fiber"), commercialisées par la société Showa Denko : surface spécifique 13m²/g.
- Carbone sphérique MCMB (en anglais "Meso-carbon microbeads"), commercialisé par Showa Denko : surface spécifique inférieure à 5m²/g.

### Soufre

- Soufre α-orthorhombique, α-S₈ commercialisé par la société ALDRICH. Paramètres cristallographiques:
   - groupe d'espace "Fddd"
   - paramètres de maille, a = 10,45 Ǻ ; b = 12,84 Ǻ et c = 24,4 Ǻ.
- Soufre raffiné α-orthorhombique, α-S₈ commercialisé par la société ALDRICH, ayant les mêmes paramètres cristallographiques.

### Exemple 1:

3 grammes de soufre α-orthorhombique, de type flex, sont introduits dans un réacteur autoclave (bombe PARR, modèle 4749) de 23mL de contenance, à pression atmosphérique. 0,75 gramme de carbone de type Super P™, est ensuite introduit dans le réacteur. Ce dernier est ensuite scellé sous air, de façon hermétique, et placé dans une étuve. La température de chauffage (T_{c}) de l'étude est alors consignée à 125°C (+/-5°C), et maintenue à cette température pendant 24 heures. Le chauffage est ensuite arrêté. La température du réacteur revient ensuite naturellement et progressivement à température ambiante et pression atmosphérique, environ 8h après la coupure du chauffage. Après ouverture du réacteur, on récupère une poudre uniforme de couleur noire, constituée de fines particules, contenant 80% en poids de soufre et 20% poids de carbone, le pourcentage en poids étant basé sur le poids total du matériau composite conducteur soufre/carbone (1-C80/20) obtenu.

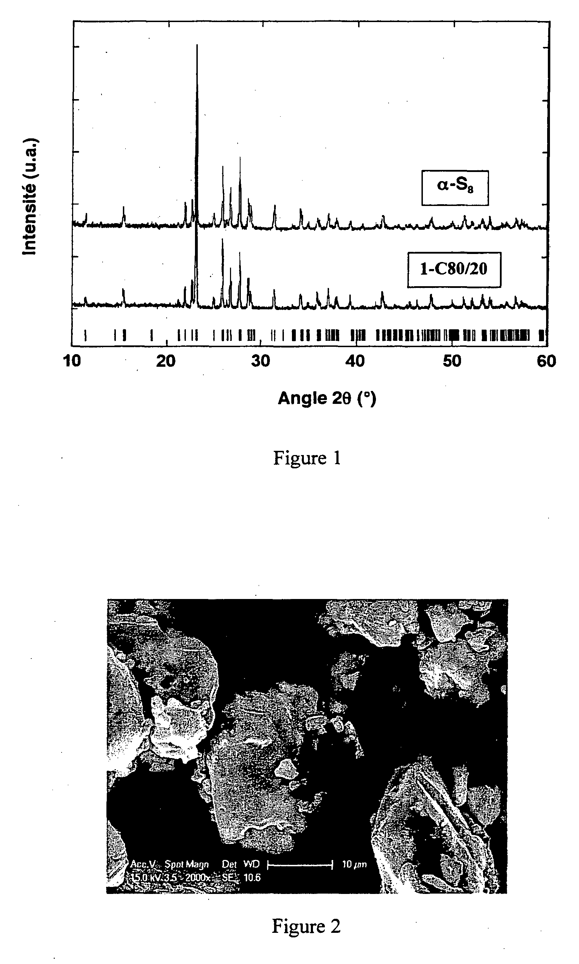

Comme représenté à la figure 1, le diagramme de diffraction aux rayons X (λ_{CuKα}) réalisé sur le matériau 1-C80/20 de l'exemple 1 (diagramme en bas de la figure 1) est comparé au diagramme de particules de soufre S₈ α-orthorhombique de départ (diagramme en haut de la figure 1). Le diagramme du matériau 1-C80/20 est similaire à celui du soufre α-orthorhombique. On retrouve, effectivement, l'ensemble des pics caractéristiques du soufre S₈ α-orthorhombique. Le carbone étant invisible aux rayons X, on prouve ainsi que le soufre dans le matériau composite conducteur soufre/carbone est sous forme de noyaux cristallins.

### Exemple 2:

6 grammes de soufre α-orthorhombique, de type flex, sont introduits dans un réacteur autoclave (bombe PARR, modèle 4748) de 125mL de contenance, à pression atmosphérique. 1,5 grammes de carbone de type Super P™ sont, par la suite, introduits dans le réacteur. Ce dernier est ensuite scellé sous air, de façon hermétique, et placé dans une étuve. La température de chauffage (T_{c}) de l'étude est alors consignée à 125°C (+/-5°C) et maintenue à cette température pendant 24 heures. Ensuite, le chauffage est arrêté. La température du réacteur revient naturellement et progressivement à température ambiante et pression atmosphérique, environ 8h après la coupure du chauffage. Après ouverture du réacteur, on récupère une poudre uniforme de couleur noire, constituée de fines particules, contenant 80% en poids de soufre et 20% poids de carbone.

La poudre uniforme de couleur noire obtenue précédemment est ensuite broyée mécaniquement selon le mode opératoire suivant. 10 grammes poudre sont placés dans une cellule de broyage en acier, de 50mL de contenance, commercialisée par la société Retsch. La cellule de broyage est constituée d'un bol et de trois billes en agate de 20mm de diamètre. Cette cellule est remplie et fermée en boîte à gants d'argon. La cellule est ensuite placée sur un broyeur mécanique centrifuge de marque Retsch, modèle PM100. Après 1 heure de broyage, à la vitesse de 500 tours/minute, en mode alternatif, la cellule est ouverte sous air et une poudre est recueillie, constituant le matériau composite conducteur soufre/carbone 2-C80/20.

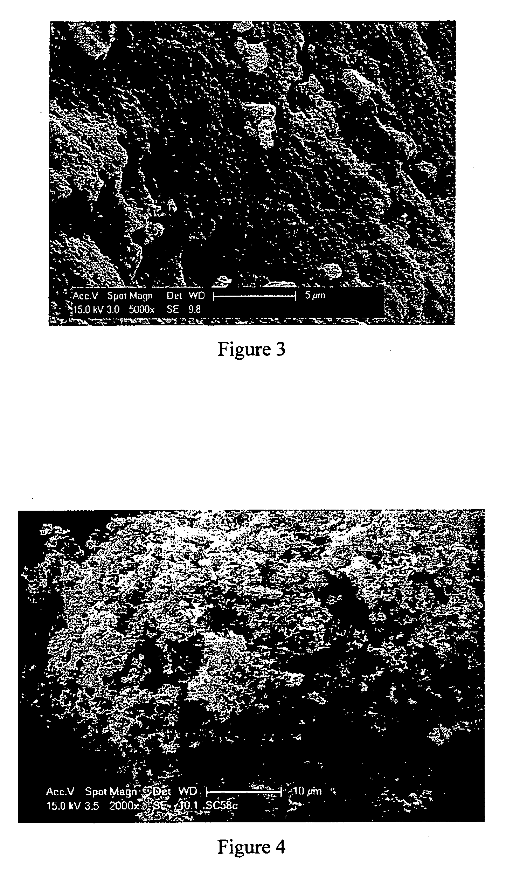

La figure 3 représente un cliché obtenu par microscopie électronique à balayage (MEB) du matériau composite conducteur soufre/carbone 2-C80/20 de l'exemple 2 après broyage.

### Exemple 3:

De fines particules de poudre de couleur noire constituant un matériau composite conducteur soufre/carbone 3-C60/40, contenant 60% en poids de soufre et 40% en poids de carbone, sont obtenues selon un mode opératoire identique à l'exemple 1, excepté qu'on utilise 2 grammes de soufre α-orthorhombique, et 1,33 grammes de carbone de type Super P™.

La figure 4 représente un cliché obtenu par microscopie électronique à balayage (MEB) du matériau composite conducteur soufre/carbone 3-C60/40 de l'exemple 3.

### Exemple 4:

De fines particules de poudre de couleur noire constituant un matériau composite conducteur soufre/carbone 4-C70/30, contenant 70% en poids de soufre et 30% en poids de carbone, sont obtenues selon un mode opératoire identique à l'exemple 1, excepté qu'on utilise 2,5 grammes de soufre S₈ α-orthorhombique raffiné, commercialisé par la société ALDRICH, 0,714 gramme de carbone de type Super P™ et 0,357 gramme de fibres de carbone de type VGCF®.

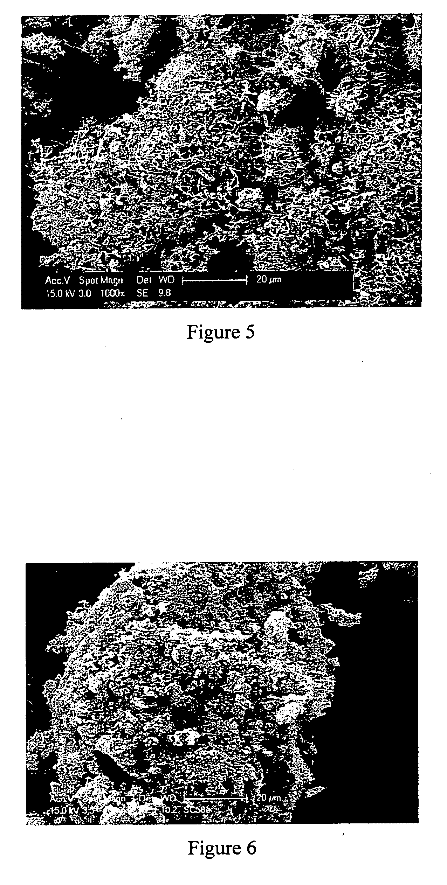

La figure 5 représente un cliché obtenu par microscopie électronique à balayage (MEB) du matériau composite conducteur soufre/carbone 4-C70/30 de l'exemple 4.

### Exemple 5:

De fines particules de poudre de couleur noire constituant un matériau composite conducteur soufre/carbone 5-C80/20, contenant 80% en poids de soufre et 20% en poids de carbone, sont obtenues selon un mode opératoire identique à l'exemple 1, excepté qu'on utilise 3 grammes de soufre α-orthorhombique, 0,75 gramme de carbone de type Super P™ et une température de chauffage (T_{c}) de 150°C (+/-5°C) maintenue pendant 12 heures.

La figure 6 représente un cliché obtenu par microscopie électronique à balayage (MEB) du matériau composite conducteur soufre/carbone 5-C80/20 de l'exemple 5.

### Exemple 6:

De fines particules de poudre de couleur noire constituant un matériau composite conducteur soufre/carbone 6-C60/40, contenant 60% en poids de soufre et 40% en poids de carbone, sont obtenues selon un mode opératoire identique à l'exemple 1, excepté qu'on utilise 1,8 grammes de soufre α-orthorhombique, 0,4 gramme de carbone de type Super P™, 0,4 gramme de fibres de carbone de type VGCF® et 0,4 gramme de carbone sphérique MCMB.

### Exemple 7:

De fines particules de poudre de couleur noire constituant un matériau composite conducteur soufre/carbone 7-C60/40, contenant 60% en poids de soufre et 40% en poids de carbone, sont obtenues selon un mode opératoire identique à l'exemple 1, excepté qu'on utilise 1,5 grammes de soufre α-orthorhombique, 1 gramme de carbone de type Super P™ et une température de chauffage (T_{c}) de 200°C (+/-5°C) maintenue pendant 24 heures.

### Exemple 8 :

De fines particules de poudre de couleur noire constituant un matériau composite conducteur soufre/carbone 8-C60/40, contenant 60% en poids de soufre et 40% en poids de carbone, sont obtenues selon un mode opératoire identique à l'exemple 7, excepté qu'on chauffe à une température de chauffage (T_{c}) de 125°C (+/-5°C) pendant 8 heures.

### Exemple 9 :

De fines particules de poudre de couleur noire constituant un matériau composite conducteur soufre/carbone 9-C60/40, contenant 60% en poids de soufre et 40% en poids de carbone, sont obtenues selon un mode opératoire identique à l'exemple 7, excepté qu'on chauffe à une température de chauffage (T_{c}) de 125°C (+/-5°C) pendant 1 semaine.

### Exemple 10 comparatif :

Un mélange de poudre d'un matériau composite conducteur soufre/carbone 10-C60/40, contenant 60% en poids de soufre et 40% en poids de carbone, est obtenu par une méthode de broyage mécanique conventionnelle à température ambiante. 2 g de soufre et 1,33 g de carbone sous forme de poudre sont placés dans une cellule de broyage en acier, de 50mL de contenance, commercialisée par la société Retsch. La cellule de broyage est constituée d'un bol et de trois billes en agate de 20mm de diamètre. Cette cellule est remplie et fermée en boîte à gants d'argon. La cellule est ensuite placée sur un broyeur mécanique centrifuge de marque Retsch, modèle PM100. Après 2 heures de broyage, à la vitesse de 500 tours/minute, en mode alternatif, la cellule est ouverte sous air et une poudre est recueillie, constituant le matériau composite conducteur soufre/carbone 10-C60/40.

Le tableau 1 ci-dessous répertorie les conditions de fabrication des exemples 1 à 10.

**Tableau 1**

| n° exemple | Nom | Broyage Tps(h) / V(tr/min) | m_{Soufre} (g) | m_{Carbone} (g) | Type de carbone | T°C/tps (H) | % poids S/C |
|---|---|---|---|---|---|---|---|
| 1 | 1-C80/20 | - | 3 | 0,75 | Super P | 125/24H | 80/20 |
| 2 | 2-C80/20 | 1 / 500 | 6 | 1,5 | Super P | 125/24H | 80/20 |
| 3 | 3-C60/40 | - | 2 | 1,33 | Super P | 125/24H | 60/40 |
| 4 | 4-C70/30 | - | 2,5 | 0,714 | Super P | 125/24H | 70/30 |
| | | | | 0,357 | Fibres VGCF | | |
| 5 | 5-C80/20 | - | 3 | 0,75 | Super P | 150/12H | 80/20 |
| 6 | 6-C60/40 | - | 1,8 | 0,4 | Super P | 125/24H | 60/40 |
| | | | | 0,4 | Fibres | | |
| | | | | 0,4 | VGCF MCMB | | |
| 7 | 7-C60/40 | - | 1,5 | 1 | Super P | 200/24H | 60/40 |
| 8 | 8-C60/40 | - | 1,5 | 1 | Super P | 125/8H | 60/40 |
| 9 | 9-C60/40 | - | 1,5 | 1 | Super P | 125/168H | 60/40 |
| 10 | 10-C60/40 | 1 / 500 | 2 | 1,33 | Super P | T_{amb.} | 60/40 |

De façon connue, lorsqu'un composé est fondu puis refroidi, le composé revenu à l'état solide se présente, généralement, sous forme d'un amas unique, à structure amorphe, ou sous forme d'agglomérats.

Ainsi, à l'issue du procédé de fabrication selon le premier mode de réalisation et notamment du traitement thermique, on s'attendrait à obtenir, à partir de soufre et de carbone de départ, un amas ou des agglomérats de carbone recouvert de soufre ayant une structure amorphe.

Or, de façon surprenante, comme illustré aux figures 3 à 6, le matériau composite conducteur soufre/carbone des exemples 2 à 5 se présente sous forme de noyaux cristallins de soufre et de carbone localisé à la surface des noyaux de soufre. On forme un matériau composite conducteur soufre/carbone, sous forme de poudre homogène de couleur noire, contenant uniquement du soufre sous forme cristallin et du carbone. Selon la teneur en carbone dans le matériau composite conducteur soufre/carbone, le carbone recouvre, totalement ou partiellement, la surface du noyau de soufre.

Dans le matériau composite conducteur soufre/carbone, le carbone conserve sa structure d'origine et a une surface spécifique qui reste peu élevée c'est-à-dire inférieure ou égale à 200 m²/g, de préférence inférieure ou égale à 65 m²/g.

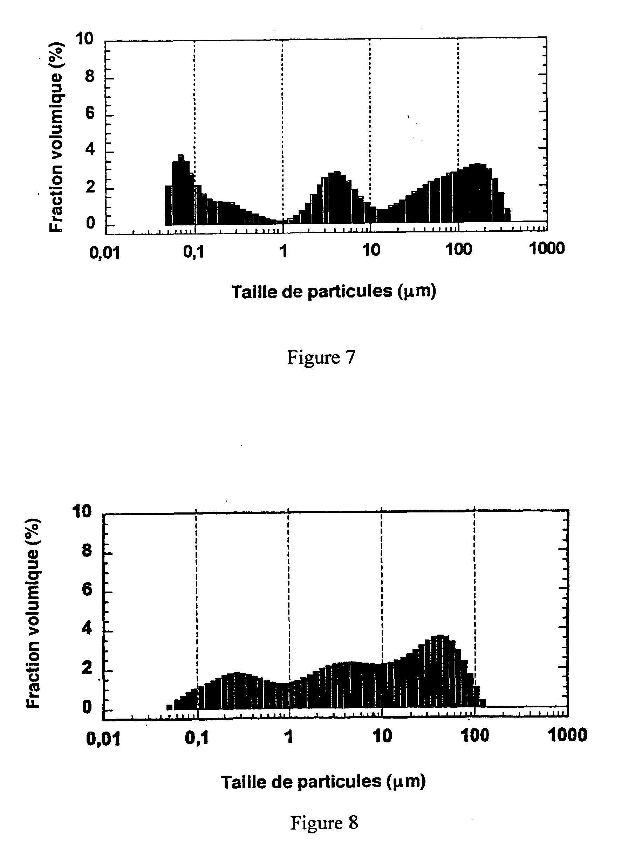

Comme représenté à la figure 7, le matériau composite conducteur soufre/carbone 1-C80/20 est formé de fines particules à distribution granulométrique homogène allant de 0,05 et 400 mm.

De façon surprenante, on constate qu'après fusion, le soufre dans le matériau composite conducteur soufre/carbone n'a formé ni d'amas ou blocs ni d'agglomérats mais s'est recristallisé. Le carbone s'est également organisé autour des noyaux de soufre. Ainsi, le matériau composite conducteur soufre/carbone obtenu est, de façon inattendue, pulvérulent et a une granulométrie caractéristique avec une majorité de fines particules ayant un diamètre moyen inférieur à 10 mm.

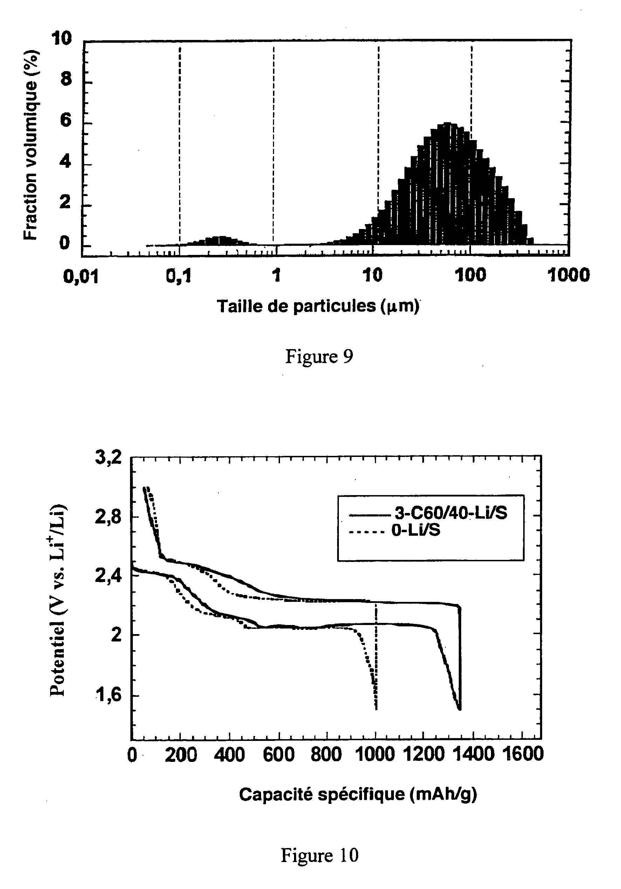

Par ailleurs, les figures 8 et 9 permettent de comparer la distribution granulométrique du soufre de départ α-S₈ et du matériau composite conducteur soufre/carbone C-80/20 obtenu à l'exemple 2, après broyage.

Comparativement, la taille moyenne des particules du matériau composite conducteur soufre/carbone C-80/20 est inférieure à celle du soufre de départ α-S₈. La distribution granulométrique du matériau composite conducteur soufre/carbone C-80/20 se répartit de façon homogène entre 0,05mm à 100mm alors que celle du soufre de départ se concentre davantage entre 0,4mm à 300mm.

Les différentes étapes du procédé de fabrication du matériau composite conducteur soufre/carbone décrit précédemment, en particulier le traitement thermique sous réacteur scellé hermétiquement sous pression atmosphérique et le refroidissement progressif, contribuent avantageusement à la recristallisation du soufre sous forme de noyaux cristallins et à l'agencement du carbone autour des noyaux de soufre.

Le procédé de fabrication du matériau composite conducteur soufre/carbone évite toute perte de matière car le réacteur est scellé hermétiquement. Tout le carbone et le soufre de départ réagit pour former le matériau composite conducteur soufre/carbone pulvérulent, sans aucune perte de matière.

Le matériau composite conducteur soufre/carbone ainsi obtenu est particulièrement adapté à une utilisation comme matériau actif d'une électrode. On entend par matériau actif d'une électrode, un matériau participant aux réactions électrochimiques mises en jeu au sein de l'électrode.

Le matériau composite conducteur soufre/carbone est, avantageusement, adapté à une utilisation comme matériau actif d'une électrode d'un accumulateur au lithium.

Selon un mode de réalisation préférentiel, le matériau composite conducteur soufre/carbone est utilisé comme matériau actif d'une électrode d'un accumulateur lithium/soufre (Li/S).

Selon un mode de réalisation particulier, un accumulateur Li/S obtenu à partir du matériau composite conducteur soufre/carbone décrit précédemment est particulièrement performant et a, avantageusement, une capacité spécifique supérieure ou égale à environ 1300 mAh/g ± Δ 50mAh/g, de préférence supérieure ou égale à 1350 mAh/g ± Δ 50mAh/g de soufre sous une tension d'environ 2V.

Le matériau composite conducteur soufre/carbone peut être employé directement sous forme de poudre, pour réaliser une électrode d'accumulateur au lithium, préférentiellement, de type lithium/soufre (Li/S).

Alternativement, le matériau composite conducteur soufre/carbone peut être mis en forme, par exemple, sous forme d'un film plastifié selon tout procédé connu.

Pour former un film, le matériau composite conducteur soufre/carbone peut être mis en solution, organique ou aqueuse, et mélangé à un liant destiné à assurer la cohésion mécanique, une fois le solvant évaporé.

De façon connue, un électrolyte d'accumulateur Li-ion de type Li/S peut, par exemple, être constitué d'un sel comportant au moins un cation Li⁺, choisi parmi :
- du lithium bis[(trifluorométhyl)sulfonyl]imide (LiN(CF₃SO₂)₂), du lithium Trifluorométhane sulfonate (LiCF₃SO₃), Lithium Bis(Oxalato)Borate (LiBOB), du lithium bis(perfluoroéthylsulfonyl)imide (LiN(CF₃CF₂SO₂)₂),
- des composés de formule LiClO₄, LiAsF₆, LiPF₆, LiBF₄, Lil, LiCH₃SO₃ ou LiB(C₂O₄)₂ et,
- des composés fluorés de formule LiR_{F}SO₃R_{F}, LiN(R_{F}SO₂)₂ ou LiC(R_{F}SO₂)₃ où R_{F} est un groupement choisi parmi un atome de fluor et un groupement perfluoroalkyle comportant entre un et huit atomes de carbone.

Le sel de lithium est, de préférence, dissout dans un solvant ou un mélange de solvants polaires aprotiques et peut être supporté par un élément séparateur disposé entre les deux électrodes de l'accumulateur. L'élément séparateur est alors imbibé d'électrolyte.

Dans le cas d'un accumulateur Li-ion à électrolyte polymère, le sel de lithium est dissout dans un composite polymère solide comme le polyoxyde d'éthylène (POE), le polyacrylonitrile (PAN) le polyméthacrylate de méthyle (PMMA), le difluorure de polyvinylidène (PVdF) ou un de leurs dérivés.

Une couche protectrice à base de polymère ou de verre conducteur peut, également, être présente dans la structure de l'accumulateur Li/S, afin d'éviter la migration des polysulfures formés au voisinage de l'électrode positive, au cours du fonctionnement de l'accumulateur, lors de la décharge.

### Préparation d'un accumulateur Lithium/Soufre

À titre d'exemple, un accumulateur lithium/soufre de type "pile bouton" (3-C60/40-Li/S) est réalisé à partir d'une électrode négative de lithium, d'une électrode positive à base du matériau composite conducteur soufre/carbone 3-C60/40 réalisé selon l'exemple 3 et d'un séparateur.

L'électrode négative est formée d'un film circulaire de 16mm de diamètre et 130µm d'épaisseur, déposé sur un disque d'inox servant de collecteur de courant.

Le séparateur est imbibé d'un électrolyte liquide à base de sel de lithium de bis[(trifluorométhyl)sulfonyl]imide (LiTFSI) à une concentration de 1mol.L⁻¹ dans un mélange 50/50 en volume de tetraéthylèneglycol diméthyléther (TEGDME) et de dioxolane (DIOX).

L'électrode positive est constituée de 48% en poids de soufre, 42% en en poids de carbone et 10% en poids de difluorure de polyvinylidène (PVdF) constituant un liant. L'électrode positive est formée d'un film composite circulaire de 14mm de diamètre et d'une dizaine de micromètres d'épaisseur. L'électrode positive est déposée sur un feuillard en aluminium de 20mm d'épaisseur constituant le collecteur de courant. Le film composite circulaire est préalablement prélevé sur un film composite obtenu à partir d'un mélange formé de 80 % en poids de matériau 3-C60/40, 10 % en poids de PVdF et 10% en poids de noir de carbone de type super P™, les pourcentages massiques étant calculés par rapport au poids total du film composite.

À titre de premier exemple comparatif, un accumulateur Li/S conventionnel (O-Li/S) en tout point identique à l'accumulateur 3-C60/40-Li/S, est réalisé à partir d'une électrode positive traditionnelle contenant également 48% en poids de soufre, 42% en poids de carbone Super P™ et 10% en poids de PVdF.

Un test électrochimique réalisé sur l'accumulateur 3-C60/40-Li/S et sur l'accumulateur 0-Li/S est représenté à la figure 10. Les résultats obtenus mettent en exergue les capacités spécifiques pratiques élevées de l'accumulateur 3-C60/40-Li/S, proches de la valeur théorique.

Comme représenté à la figure 10, l'accumulateur 3-C60/40-Li/S délivre, à 20°C et sous un régime de C/10, une capacité spécifique initiale d'environ 1350mAh/g de soufre alors que celle de l'accumulateur 0-Li/S est nettement inférieure, n'atteignant qu'environ 1000mAh/g.

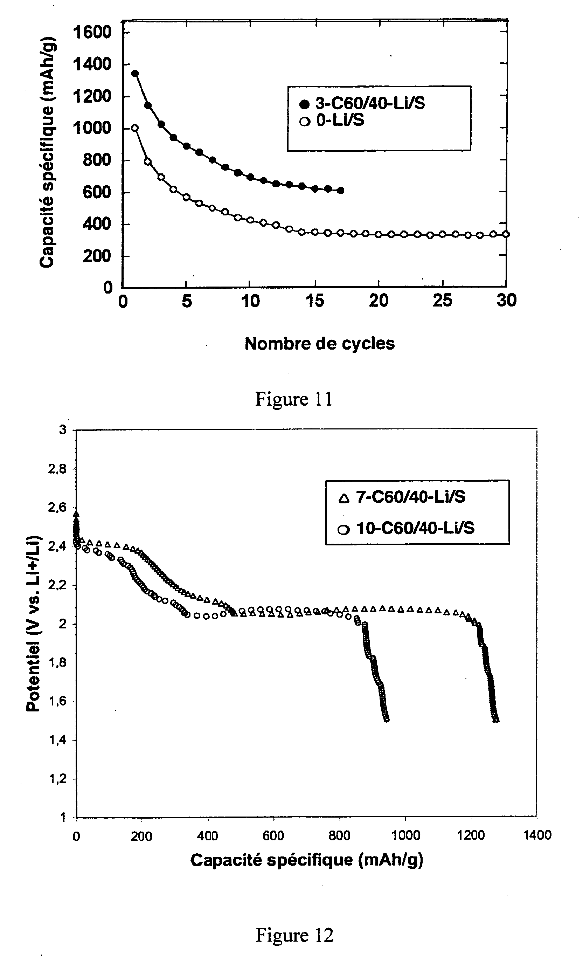

La figure 11 montre l'évolution de la capacité spécifique du soufre en fonction du nombre de cycles de l'accumulateur 3-C60/40-Li/S en comparaison avec l'accumulateur 0-Li/S. Ce test permet d'évaluer la cyclabilité de l'accumulateur et est représentatif de sa durée de vie.

On constate qu'au cours des cycles, l'accumulateur 3-C60/40-Li/S maintient une capacité spécifique supérieure à celle de l'accumulateur 0-Li/S.

À titre de second exemple comparatif, deux accumulateurs 7-C60/40-Li/S et 10-C60/40-Li/S ont été réalisés selon le même protocole que l'accumulateur 3-C60/40-Li/S à l'exception du fait qu'on utilise pour former l'électrode positive, respectivement, le matériau actif 7-C60/40 de l'exemple 7 et 10-C60/40 de l'exemple 10 et que l'électrode positive est constituée de 45% en poids de soufre, 45% en poids de carbone et 10% en poids de PVdF. Le film composite circulaire est préalablement prélevé sur un film composite obtenu à partir d'un mélange formé de 75 % en poids du matériau 7-C60/40 ou 10-C60/40, 10 % en poids de PVdF et 15% en poids de noir de carbone de type super P™, afin d'obtenir une électrode positive ayant une quantité égale en poids de soufre et de carbone. Les deux accumulateurs 7-C60/40-Li/S et 10-C60/40-Li/S sont en tout point identiques à l'exception du mode de réalisation du matériau composite soufre/carbone constituant le matériau actif de l'électrode. En l'occurrence, ils diffèrent uniquement en ce que le matériau actif soufre/carbone 7-C60/40 est obtenu selon le procédé de l'invention tandis que le matériau actif soufre/carbone 10-C60/40-Li/S est obtenu par une méthode de broyage mécanique conventionnelle.

Deux tests électrochimiques réalisés sur les accumulateurs 7-C60/40-Li/S et 10-C60/40-Li/S sont représentés sur le même graphe à la figure 12. Les résultats obtenus mettent en exergue la capacité spécifique nettement supérieure de l'accumulateur 7-C60/40-Li/S, par rapport à celle de l'accumulateur 10-C60/40-Li/S.

Comme représenté à la figure 12, l'accumulateur 7-C60/40-Li/S délivre, à 20°C et sous un régime de C/10, une capacité spécifique initiale d'environ 1300mAh/g de soufre alors que celle de l'accumulateur 10-C60/40-Li/S est nettement inférieure, n'atteignant qu'environ 950 mAh/g. On constate donc un effet technique important résultant du procédé de fabrication utilisé pour obtenir le matériau composite conducteur soufre/carbone de l'invention.

Le matériau composite conducteur soufre/carbone selon l'invention présente ainsi de meilleures propriétés conductrice et électrochimique qu'un mélange pulvérulent carbone/soufre classique d'une électrode positive d'un accumulateur Li/S. En effet, la cohésion des particules de carbone et de soufre favorise la conduction électronique au sein de l'électrode positive et améliore la capacité spécifique du matériau formant l'électrode positive de l'accumulateur Li/S. Or, dans ce type d'électrode obtenue par simple mélange de carbone et de soufre, les particules de carbone et de soufre sont mal dispersées.

L'électrode positive réalisée avec le matériau composite conducteur soufre/carbone a une structure stable lors de la charge et la décharge et se distingue d'une électrode positive conventionnelle, à base de soufre, entre autres, par les résultats de capacité spécifique du soufre supérieure ou égale à environ 1300 mAh/g, de préférence, 1350 mAh/g.

Le procédé de fabrication du matériau composite conducteur soufre/carbone décrit précédemment est simple à mettre en oeuvre et peu coûteux. Il permet de combiner le soufre et le carbone pour former un composite ayant des propriétés électrochimique et conductrice améliorées que les composés de départ seuls ne possèdent pas. Cette synergie est attribuable à la structure du matériau composite conducteur soufre/carbone, notamment à la structure cristalline du soufre et à l'organisation du carbone autour des noyaux de soufre. Le carbone situé autour du soufre assure la conduction électronique dans le matériau composite conducteur soufre/carbone.

L'invention n'est pas limitée aux modes de réalisation décrits ci-dessus à titre d'exemples, non limitatifs. Bien que l'exemple donné soit une utilisation comme matériau actif d'une électrode positive d'accumulateur Li/S, le matériau composite conducteur soufre/carbone peut être utilisé dans n'importe quelle électrode, positive ou négative, à base de soufre.

## Revendications

1. Procédé de fabrication d'un matériau composite conducteur soufre/carbone obtenu uniquement à partir d'un soufre de départ et d'un carbone de départ, **caractérisé en ce qu'**il comporte les étapes successives suivantes :
- on introduit dans un réacteur, à pression atmosphérique, entre 50% et 90% en poids de soufre de départ et entre 50% et 10% en poids de carbone de départ ayant une surface spécifique inférieure ou égale à 200 m²/g, la somme des proportions, respectivement, du soufre et du carbone de départ atteignant 100%,
- on scelle hermétiquement le réacteur sous pression atmosphérique, et
- on forme le matériau composite conducteur soufre/carbone, sous forme d'une poudre, par un traitement thermique, en chauffant ledit réacteur à une température de chauffage (T_{c}) comprise entre 115°C et 400°C, sans régulation externe de la pression à l'intérieur du réacteur et en maintenant ledit réacteur à ladite température de chauffage (T_{c}).

2. Procédé selon la revendication 1, **caractérisé en ce que** la température de chauffage (T_{c}) est comprise entre 125°C et 200°C.

3. Procédé selon l'une des revendications 1 et 2, **caractérisé en ce que** le carbone de départ est constitué d'une ou de plusieurs formes allotropiques du carbone.

4. Procédé selon l'une quelconque des revendications 1 à 3, **caractérisé en ce que** le soufre de départ est constitué d'une ou de plusieurs formes allotropiques du soufre.

5. Procédé selon la revendication 4, **caractérisé en ce que** le soufre de départ est un soufre S₈ α-orthorhombique.

6. Procédé selon l'une quelconque des revendications 1 à 5, **caractérisé en ce que** la température du réacteur revient, naturellement et progressivement, à température ambiante après le traitement thermique.

7. Procédé selon l'une quelconque des revendications 1 à 6, **caractérisé en ce que** le matériau composite conducteur soufre/carbone obtenu après le traitement thermique est ensuite broyé mécaniquement pour obtenir une distribution granulométrique homogène.

8. Procédé selon l'une quelconque des revendications 1 à 7, **caractérisé en ce que** l'étape de traitement thermique est réalisée en présence d'air.

9. Procédé selon l'une quelconque des revendications 1 à 8, **caractérisé en ce que** la surface spécifique du carbone de départ est inférieure ou égale à 65 m²/g.

10. Matériau composite conducteur soufre/carbone pulvérulent directement obtenu par le procédé selon l'une quelconque des revendications 1 à 9, **caractérisé en ce que** le soufre est sous forme de noyaux cristallins dans ledit matériau composite conducteur soufre/carbone, la proportion de soufre dans le matériau composite conducteur soufre/carbone représentant entre 50% et 90% en poids du poids total dudit matériau composite et le carbone étant localisé à la surface desdits noyaux de soufre.

11. Matériau composite selon la revendication 10, **caractérisé en ce que** la taille moyenne des particules du matériau composite conducteur soufre/carbone est inférieure à celle du soufre de départ.

12. Utilisation du matériau composite conducteur soufre/carbone selon l'une des revendications 10 et 11, comme matériau actif d'une électrode.

13. Utilisation selon la revendication 12, **caractérisée en ce que** l'électrode est une électrode d'un accumulateur au lithium.

## Patentansprüche

1. Verfahren zur Herstellung eines leitenden Schwefel-/Kohlenstoff-Verbundwerkstoffs, der lediglich aus einem Ausgangsschwefel und aus einem Ausgangskohlenstoff gewonnen wird, **dadurch gekennzeichnet, dass** es die folgenden aufeinanderfolgenden Schritte umfasst:
- zwischen 50 Gew.-% und 90 Gew.-% Ausgangsschwefel sowie zwischen 50 Gew.-% und 10 Gew.-% Ausgangskohlenstoff mit einer spezifischen Oberfläche kleiner oder gleich 200 m²/g werden unter atmosphärischem Druck in einen Reaktor eingebracht, wobei die Summe der Anteile des Ausgangsschwefels bzw. -kohlenstoffs 100 % erreicht,
- der Reaktor wird unter atmosphärischem Druck hermetisch verschlossen, und
- der leitende Schwefel-/Kohlenstoff-Verbundwerkstoff wird in Form eines Pulvers durch eine Wärmebehandlung gebildet, indem der Reaktor - ohne externe Regulierung des Druckes innerhalb des Reaktors - auf eine Heiztemperatur (T_{c}) im Bereich zwischen 115 °C und 400 °C erhitzt wird und der Reaktor auf der Heiztemperatur (T_{c}) gehalten wird.

2. Verfahren nach Anspruch 1, **dadurch gekennzeichnet, dass** die Heiztemperatur (T_{c}) zwischen 125 °C und 200 °C beträgt.

3. Verfahren nach einem der Ansprüche 1 und 2, **dadurch gekennzeichnet, dass** der Ausgangskohlenstoff von einer oder mehreren allotropen Formen des Kohlenstoffs gebildet ist.

4. Verfahren nach einem der Ansprüche 1 bis 3, **dadurch gekennzeichnet, dass** der Ausgangsschwefel von einer oder mehreren allotropen Formen des Schwefels gebildet ist.

5. Verfahren nach Anspruch 4, **dadurch gekennzeichnet, dass** der Ausgangsschwefel ein orthorhombischer α-S8-Schwefel ist.

6. Verfahren nach einem der Ansprüche 1 bis 5, **dadurch gekennzeichnet, dass** die Temperatur des Reaktors nach der Wärmebehandlung auf natürliche Weise und schrittweise auf Umgebungstemperatur zurückgeht.

7. Verfahren nach einem der Ansprüche 1 bis 6, **dadurch gekennzeichnet, dass** der nach der Wärmebehandlung erhaltene leitende Schwefel-/Kohlenstoff-Verbundwerkstoff anschließend mechanisch zerkleinert wird, um eine homogene Komgrößenverteilung zu erreichen.

8. Verfahren nach einem der Ansprüche 1 bis 7, **dadurch gekennzeichnet, dass** der Wärmebehandlungsschritt in Gegenwart von Luft durchgeführt wird.

9. Verfahren nach einem der Ansprüche 1 bis 8, **dadurch gekennzeichnet, dass** die spezifische Oberfläche des Ausgangskohlenstoffs weniger als oder gleich 65 m²/g beträgt.

10. Leitender pulverförmiger Schwefel-/Kohlenstoff-Verbundwerkstoff, der direkt durch das Verfahren nach einem der Ansprüche 1 bis 9 erhalten wird, **dadurch gekennzeichnet, dass** der Schwefel in Form kristalliner Kerne in dem leitenden Schwefel/Kohlenstoff-Verbundwerkstoff vorliegt, wobei der Schwefelanteil in dem leitenden Schwefel-/Kohlenstoff-Verbundwerkstoff zwischen 50 Gew.-% und 90 Gew.-% des Gesamtgewichts des Verbundwerkstoffs ausmacht und wobei der Kohlenstoff sich an der Oberfläche der Schwefelkerne befindet.

11. Verbundwerkstoff nach Anspruch 10, **dadurch gekennzeichnet, dass** die mittlere Größe der Partikel des leitenden Schwefel-/Kohlenstoff-Verbundwerkstoffs unter derjenigen des Ausgangsschwefels liegt.

12. Verwendung des leitenden Schwefel-/Kohlenstoff-Verbundwerkstoffs nach einem der Ansprüche 10 und 11, als aktives Material einer Elektrode.

13. Verwendung nach Anspruch 12, **dadurch gekennzeichnet, dass** die Elektrode eine Elektrode eines Lithium-Akkumulators ist.

## Claims

1. A method for producing a composite sulphur/carbon conductive material obtained solely from an initial sulphur and an initial carbon, **characterized in that** it comprises the following successive steps:
- between 50% and 90% by weight of initial sulphur and between 50% and 10% by weight of initial carbon having a specific surface smaller than or equal to 200 m²/g are placed in a reactor at atmospheric pressure, the sum of the proportions respectively of the initial sulphur and carbon attaining 100%,
- the reactor is hermetically sealed at atmospheric pressure, and
- the composite sulphur/carbon conductive material is formed, in the form of a powder, by heat treatment by heating said reactor to a heating temperature (T_{c}) comprised between 115°C and 400°C, without external regulation of the pressure inside the reactor, and keeping said reactor at said heating temperature (T_{c}).

2. The method according to claim 1, **characterized in that** the heating temperature (T_{c}) is comprised between 125°C and 200°C.

3. The method according to one of claims 1 and 2, **characterized in that** the initial carbon is constituted by one or more allotropic forms of carbon.

4. The method according to any one of claims 1 to 3, **characterized in that** the initial sulphur is constituted by one or more allotropic forms of sulphur.

5. The method according to claim 4, **characterized in that** the initial sulphur is a α-orthorhombic S₈ sulphur.

6. The method according to any one of claims 1 to 5, **characterized in that** the temperature of the reactor returns naturally and progressively to ambient temperature after the heat treatment.

7. The method according to any one of claims 1 to 6, **characterized in that** the composite sulphur/carbon conductive material obtained after the heat treatment is then mechanically grinded to obtain a homogeneous grain size distribution.

8. The method according to any one of claims 1 to 7, **characterized in that** the heat treatment step is performed in the presence of air.

9. The method according to any one of claims 1 to 8, **characterized in that** the specific surface of the initial carbon is smaller than or equal to 65 m²/g.

10. A powdery composite sulphur/carbon conductive material directly obtained by the method according to any one of claims 1 to 9, **characterized in that** the sulphur is in the form of crystalline nuclei in said composite sulphur/carbon conductive material, the proportion of sulphur in the composite sulphur/carbon conductive material representing between 50% and 90% by weight of the total weight of said composite material and the carbon being located at the surface of said sulphur nuclei.

11. The composite material according to claim 10, **characterized in that** the mean size of the particles of the composite sulphur/carbon conductive material is smaller than that of the initial sulphur.

12. Use of the composite sulphur/carbon conductive material according to one of claims 10 and 11 as active material of an electrode.

13. Use according to claim 12, **characterized in that** the electrode is an electrode of a lithium battery.
